# EUROPEAN PATENT APPLICATION

(11) **EP 4 738 214 A1**
(43) Date of publication of application: **06.05.2026**
(21) Application number: 25205313.7
(22) Date of filing: 29.09.2025
(51) Int. Cl.: G06Q 10/06, G06F 3/01

(54) **CUSTOMIZABLE DASHBOARD**

(30) Priority: 31.10.2024 US 202418933801
(71) Applicant: Schneider Electric IT Corporation, Foxboro, MA 02035 (US)
(72) Inventor: FISKE, Adam M., Andover, 01810 (US)
(74) Representative: Plasseraud IP

(57) **Abstract**

Examples of the disclosure include a system for customizing dashboards, the system including at least one interface, and at least one controller coupled to the at least one interface and configured to output, via the at least one interface, a list of users, receive a selection of a first user from the list of users, output, via the at least one interface, a first dashboard associated with the first user, wherein the first dashboard includes a first information type, receive a selection of a second information type, output, via the at least one interface, the first dashboard associated with the first user, wherein the first dashboard includes the second information type, receive a selection of a second user from the list of users, and output, via the at least one interface, a second dashboard associated with the second user, wherein the second dashboard includes a third information type.

## Description

### BACKGROUND

### 1. Field of the Disclosure

At least one example in accordance with the present disclosure relates generally to customizable system-management dashboards.

### 2. Discussion of Related Art

Industrial systems may include industrial equipment and related monitoring equipment. Monitoring equipment may include sensors, such as temperature sensors, current sensors, voltage sensors, and so forth. Monitoring equipment may also include cameras in some examples. Monitoring information acquired by the monitoring equipment may be provided to a manager of an industrial system. The manager may use the monitoring information to manage the industrial system.

### SUMMARY

Methods, systems and computer-readable media are provided according to the appended claims.

Examples of the methods and systems discussed herein are not limited in application to the details of construction and the arrangement of components set forth in the following description or illustrated in the accompanying drawings. The methods and systems may be capable of implementation in other embodiments and of being practiced or of being carried out in various ways. Examples of specific implementations are provided herein for illustrative purposes and are not intended to be limiting. Acts, components, elements, and features discussed in connection with any one or more examples may be configured to operate and/or be implemented in a similar role in any other examples.

The phraseology and terminology used herein is for the purpose of description. References to examples, embodiments, components, elements, or acts of the systems and methods herein referred to in the singular may also embrace embodiments including a plurality. Similarly, references in plural to embodiments, components, elements, or acts may be implemented as a singularity. References in the singular or plural form may therefore not be intended to limit the presently disclosed systems or methods, their components, acts, or elements. The use herein of "including," "comprising," "having," "containing," "involving," and variations so forth, may encompass the items listed thereafter and equivalents thereof as well as additional items.

References to "or" may be construed as inclusive so that any terms described using "or" may indicate any of a single, more than one, and all of the described terms. For example, the phrase "at least one of A or B" may refer A and/or B-that is, A only, B only, or A and B together. In addition, in the event of inconsistent usages of terms between this document and documents incorporated herein by reference, the term usage in the incorporated documents is supplementary to this document. For irreconcilable differences, the term usage in this document controls.

### BRIEF DESCRIPTION OF THE DRAWINGS

Various aspects of at least one embodiment are discussed below with reference to the accompanying figures, which may not be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or substantially similar component that is illustrated in various figures may be represented by a like numeral. For purposes of clarity, not every component may be labeled in every figure. In the figures:
FIG. 1 illustrates a block diagram of a system according to an example;
FIG. 2 illustrates a process of customizing dashboards according to an example;
FIG. 3 illustrates a graphical depiction of a dashboard according to an example; and
FIGS. 4A and 4B illustrate a settings dashboard according to an example.

### DETAILED DESCRIPTION

As discussed above, industrial systems may include industrial equipment and associated monitoring equipment. For example, a system such as a data center may include equipment such as servers, cooling equipment, power supplies, and so forth. Although the principles of the disclosure are applicable to any of various industrial systems, examples discussed herein refer to data centers for purposes of example. Data centers may include various sensors, such as temperature sensors, voltage sensors, current sensors, and so forth, and may further include one or more cameras distributed throughout the data center.

Information derived from the sensors and/or cameras may be provided to one or more data-center managers. For example, information derived form the sensed information may be provided to one or more data-center managers via graphical dashboards depicting sensor information, alarm information, camera feeds, and so forth.

In some examples, a system administrator may oversee the one or more data-center managers. As managers come and go, or have different management responsibilities, the system administrator may wish to customize one or more managers' dashboards to modify what information is displayed by the dashboard. In some examples, the administrator may obtain a given manager's login information (including, for example, a username and password) and log into a manager's account to modify the manager's dashboard. However, this process may be tedious and inefficient, and may expose the system to security issues with managers sharing their login credentials.

Examples of the disclosure provide a customizable-dashboard system in which a system administrator has direct access to one or more manager dashboards. The administrator may directly customize each manager's dashboard from the administrator's own dashboard. That is, rather than logging in as each individual manager to customize the managers' dashboards, the administrator may not need to leave their own dashboard to perform the modifications. Accordingly, administrators may quickly, easily, and securely modify each manager's dashboard directly.

Current dashboard-management systems, such as systems in which an administrator simply logs in as the manager, may be tedious and prone to security issues. Such systems may operate inefficiently, because an administrator individually logs in as each manager that the administrator wishes to customize the dashboard of. This is a technical problem. An example embodiment of a dashboard-customization system according to this disclosure includes at least one interface, and at least one controller coupled to the at least one interface and configured to output, via the at least one interface, a list of users; receive a selection of a first user from the list of users; output, via the at least one interface, a first dashboard associated with the first user, wherein the first dashboard comprises a first information type; receive a selection of a second information type; output, via the at least one interface, the first dashboard associated with the first user, wherein the first dashboard comprises the second information type; receive a selection of a second user from the list of users; and output, via the at least one interface, a second dashboard associated with the second user, wherein the second dashboard comprises a third information type.

At least this foregoing combination of features comprises a dashboard-customization system that serves as a technical solution to the foregoing technical problem. This technical solution is not routine and is unconventional. This technical solution is a practical application of the dashboard-customization system design that solves the foregoing technical problem and constitutes an improvement in the technical field of industrial-system management at least by enabling administrators to customize manager dashboards more quickly, easily, and securely.

In various examples, the dashboards described herein may be utilized for monitoring system status and presenting operational data, as well as serving as a decision-support tool for users responsible for managing industrial systems. Based on the information presented on the dashboard-such as sensor readings, alarm notifications, and equipment status-users may take a variety of actions to maintain or improve system performance. For example, a user may suppress, restart, or reconfigure a server in response to detected anomalies, change temperature setpoints or thresholds to address environmental conditions, or increase cooling capacity if elevated temperatures are observed. Additionally, users may add or remove servers or other equipment as operational demands change, respond to or acknowledge alarms, adjust power supply parameters, or initiate maintenance procedures. Other possible actions include reassigning workloads, enabling or disabling specific sensors or devices, triggering backup or failover systems, modifying access permissions, scheduling automated routines, or activating and deactivating camera feeds or monitoring zones. The dashboard may thus provide actionable insights that enable users to make informed decisions and implement appropriate control measures within the managed environment. In some examples, the first user takes an action on the basis of information comprised on the global dashboard. In some examples, the first user takes an action on the basis of the first or second information type comprised on the first dashboard.

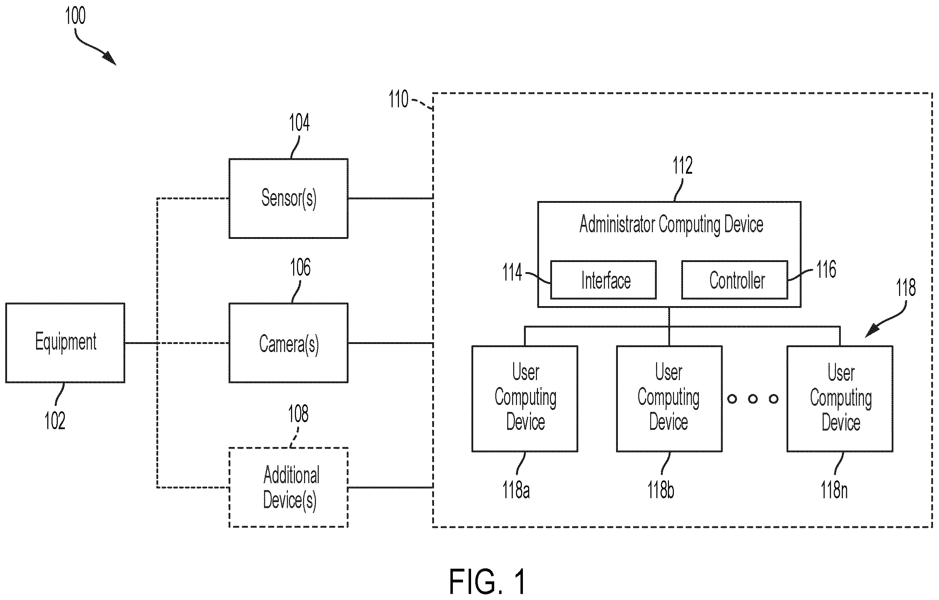

FIG. 1 illustrates a block diagram of a system 100 according to an example. For example, the system 100 may at least partially include a data center. The system 100 includes equipment 102, one or more sensors 104 ("sensors 104"), one or more cameras 106 ("cameras 106"), optionally one or more additional devices 108 ("additional devices 108"), and a monitoring system 110. The monitoring system 110 includes an administrator computing device 112 which includes at least one interface 114 ("interface 114") and at least one controller 116 ("controller 114"), and an arbitrary number of one or more user computing devices 118a-118n (collectively, "user computing devices 118").

The equipment 102 may include one or more units of equipment. For example, in examples in which the system 100 includes a data center, the equipment 102 may include servers, power supplies, cooling equipment, lights, and so forth. Although the equipment 102 may include industrial equipment in some examples, in other examples the equipment 102 may include non-industrial equipment.

The sensors 104 include one or more sensors of the same or different types, such as temperature sensors, humidity sensors, current sensors, voltage sensors, and so forth. The sensors 104 may sense information relating to the equipment 102, such as an ambient temperature or humidity of the equipment 102, a current consumed by the equipment, a voltage of the equipment 102, and so forth.

The sensors 104 are coupled to the monitoring system 110, and may provide sensed information to the monitoring system 110. In some examples, one or more of the sensors 104 may be coupled to the equipment 102, such as one or more current or voltage sensors. In at least one example, one or more of the sensors 104 may not be coupled to the equipment 102, but may sense information relating to the equipment 102, such as one or more temperature or humidity sensors which sense a temperature and/or humidity ambient to the equipment 102.

The cameras 106 include one or more cameras. The cameras 106 may provide one or more pictures and/or video streams. For example, the cameras 106 may be oriented towards, and provide a video stream of, one or more units of the equipment 102. The cameras 106 may be coupled to the monitoring system 110 and may provide sensed information to the monitoring system 110.

The optional additional devices 108 may be included in some examples, and may be omitted in other examples. The optional additional devices 108 may include any other devices which may be included within the system 100. In some examples, the optional additional devices 108 may be coupled to the monitoring system 110.

The administrator computing device 112 may include one or more computing devices, such as a laptop computer, a desktop computer, a tablet computer, a smartphone, a combination thereof, and so forth. The interface 114 includes at least one user input and/or output interface, such as a monitor, a touchscreen, a keyboard, a mouse, a combination thereof, and so forth. The controller 116 may include control circuitry to control operation of at least the administrator computing device 112.

Each of the user computing devices 118 may include one or more computing devices, such as a laptop computer, a desktop computer, a tablet computer, a smartphone, a combination thereof, and so forth. Each of the user computing devices 118 may be operated by a user, such as a respective manager who oversees one or more operations of the system 100. For example, each manager may use a respective one of the user computing devices 118 to review information provided by the sensors 104, cameras 106, and/or additional devices 108 and manage operation of the system 100 (for example, manage operation of the equipment 102) accordingly. An administrator operating the administrator computing device 112 may oversee the users operating the user computing devices 118.

Each of the user computing devices 118 may display a dashboard to a respective user. The dashboard may depict information such as sensor outputs, alarm information, camera feeds, information derived from sensor outputs such as graphs depicting sensor outputs over time, and so forth.

Dashboards may be customizable in both content and organization. Different users may manage different aspects of the system 100 and may therefore prefer to have different information displayed on their respective dashboards. For example, if the system 100 includes a data center having several rooms containing information-technology-device racks, one manager may manage a group of racks in one room and another manager may manage a group of racks in another room. Accordingly, each manager may prefer to organize their respective dashboard such that only information related to their assigned room is displayed.

In some examples, users may operate their respective device of the user computing devices 118 to customize their dashboards. In various examples, however, it may be advantageous for an administrator to also have the ability to customize each of the users' dashboards. For example, administrators may have a greater understanding of the system 100 as a whole and may therefore be better equipped to determine which users should have access to which information on their dashboards. Furthermore, as managers come and go, the administrator may customize an incoming manager's dashboard such that the new manager's dashboard is already set up. Accordingly, in some examples, an administrator may operate the administrator computing device 112 to customize dashboards for each of the user computing devices 118.

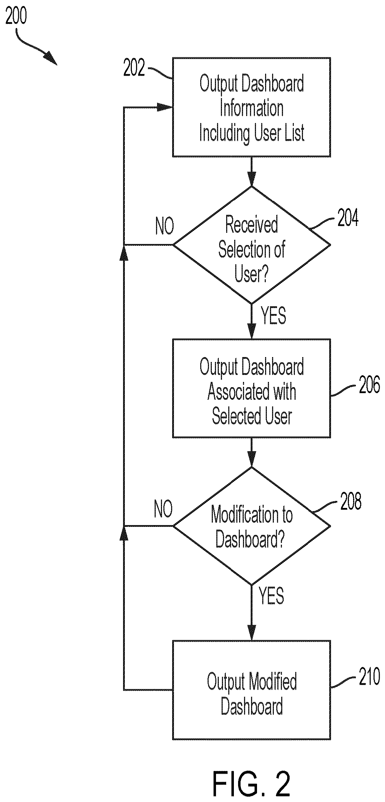

FIG. 2 illustrates a process 200 of customizing dashboards according to an example. The process 200 may be executed at least in part by the administrator computing device 112, including by one or both of the interface 114 and the controller 116.

At act 202, the administrator computing device 112 outputs dashboard information including a user list of two or more users to select from. For example, the controller 116 may control the interface 114 to display an administrator dashboard including the user list. As discussed in greater detail below, in various examples, act 202 may include the controller 116 controlling the interface 114 to display a user dashboard that includes a user list. In some examples, act 202 may include initially displaying an administrator dashboard including the user list on an initial iteration of the process 200 and may include displaying a user dashboard including the user list on subsequent iterations of the process 200.

At act 204, the administrator computing device 112 determines whether a selection of a user from the user list has been received. For example, the controller 116 may determine whether a selection of a user from the user list has been received via the interface 114. If no selection has been received (204 NO), then the process 200 returns to act 202. If a selection of a user has been received (204 YES), then the process 200 continues to act 206. In various examples, the selection of the user may be a newly received user selection or a previously received, and unchanged, user selection.

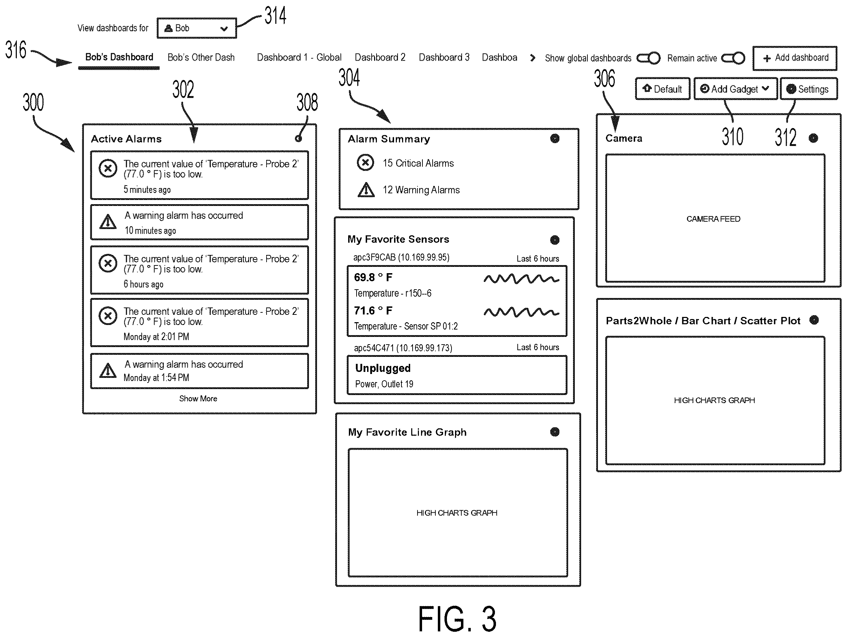

At act 206, the administrator computing device 112 outputs a user dashboard associated with the selected user. For example, FIG. 3 illustrates a graphical depiction of a dashboard 300 according to an example. The dashboard 300 includes several columns of information, of the same or different information types, including a first column 302, a second column 304, and a third column 306, each of which displays one or more information gadgets.

Information of different types may be displayed by the dashboard 300. Information types may include, for example, alarm information, sensor information, camera information, statistical information (for example, graphs or charts depicting information such as sensor information), and so forth.

For example, the first column 302 includes an active-alarms gadget that details all active alarms. The second column 304 includes an alarm-summary gadget that summarizes the active alarms, a favorite-sensors gadget that illustrates sensor-output information from one or more "favorited" sensors, and a favorite-line-graph gadget that illustrates a "favorited" line graph of sensor information. The third column 306 includes a camera gadget that provides a video feed from a camera, and a chart gadget that illustrates a chart of sensor information. The number and content of the illustrated gadgets is provided for purposes of example only.

At act 208, the administrator computing device 112 determines whether any modification to the displayed dashboard has been made. For example, modifications to the displayed dashboard may include modifications to the displayed gadgets. Each of the gadgets may have an associated settings button which may be used to adjust the settings of the corresponding gadget.

For example, in the first column 302, the active-alarms gadget includes a settings button 308 which may be selected to modify settings of the active-alarms gadget. Selecting the settings button 308 may enable an administrator to customize the content of the active-alarms gadget, such as by modifying which sensor alarms are illustrated in the active-alarms gadget. For example, the active-alarms gadget may only display sensor alarms for a certain group of selected sensors, and the administrator may add and/or remove which sensors are part of the group of selected sensors.

In additional examples, modifications to the displayed dashboard may include adding or removing gadgets. For example, the dashboard 300 includes an add-gadget button 310 which may be selected to add one or more additional gadgets. In some examples, gadgets may be removed by selecting the settings button of a gadget to be deleted, such as the settings button 308. Modifications to the displayed dashboard may therefore include adding or removing information of the same or different information types from what is already displayed.

For example, suppose that a dashboard displays only alarm information, which may be of a first information type (for example, an alarm information type). An administrator may use the add-gadget button 310 to add additional gadgets having the same information type (for example, additional alarm gadgets having the alarm information type) and/or a different information type (for example, statistical gadgets, camera gadgets, and/or other types of gadgets which may not fall within the alarm information type). Accordingly, while a dashboard display may display information of a first information type at one time, the administrator may edit the dashboard display to display information of a second information type, a third information type, a combination of the second information type and the third information type simultaneously, and so forth.

In at least one example, modifications to the displayed dashboard may include adjusting one or more dashboard settings. For example, the dashboard 300 includes a dashboard-settings button 312 which may be selected to adjust one or more settings of the dashboard 300. In some examples, the controller 116 may control the interface 114 to display a dashboard-settings interface responsive to receiving an indication of a selection of the dashboard-settings button 312.

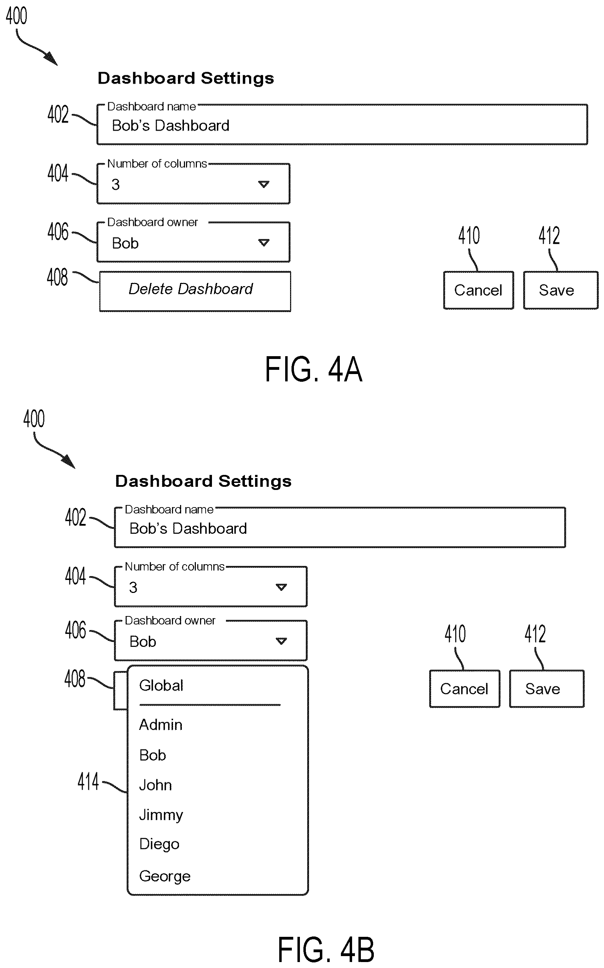

FIG. 4A illustrates a settings dashboard 400 according to an example. The controller 116 may control the interface 114 to display the settings dashboard 400 responsive to a user selection of the dashboard-settings button 312. The settings dashboard 400 includes configurable fields including a name field 402, a columns field 404, and an owner field 406. The settings dashboard 400 further includes a delete button 408, a cancel button 410, and a save button 412.

A user may interact with any of the fields 402-406 to customize the respective fields. For example, a user may interact with the name field 402 to customize the name of the dashboard 300, or may interact with the columns field 404 to customize the number of columns in the dashboard 300. Similarly, a user may interact with the owner field 406 to customize the owner of the dashboard 300. For example, FIG. 4B illustrates the settings dashboard 400 after a user has interacted with the owner field 406. As illustrated in FIG. 4B, interacting with the owner field 406 causes a drop-down menu 414 to be displayed with a list of users to whom the dashboard 300 can be assigned as an owner.

Assigning a user to be an owner of a dashboard may include associating the dashboard with that owner. Associating the dashboard with that owner may include granting access privileges to the dashboard to that owner. If a dashboard is owned by a particular user, then the dashboard may only be accessible to that particular user and/or one or more administrators (for example, all administrators). However, users other than the owner may not be able to access the dashboard. In some examples, using the drop-down menu 414 to associate the dashboard 300 with a new user may include removing access privileges from a previous owner of the dashboard 300, such that although the previous owner previously had access to the dashboard 300, the previous owner no longer has access privileges once a new owner is selected from the drop-down menu 414.

As discussed in greater detail below, certain dashboards-such as global dashboards-may be accessible to multiple users in addition to the administrator, and may be considered to be owned by every user or no user, given that access is not limited to any one particular user. Accordingly, users may have access not only to the dashboards that they specifically own, but also global dashboards which are accessible to all users.

After an administrator has finished customizing (or not customizing) any settings, the administrator may save any modifications by interacting with the save button 412, or may cancel any modifications by interacting with the cancel button 410. Alternatively, if the administrator wishes to delete the dashboard 300, the administrator may do so by interacting with the delete button 408.

If the administrator computing device 112 determines that a modification has been made to the displayed dashboard (208 YES), then the process 200 continues to act 210. As discussed above, such modifications may include changes to the gadgets on the dashboard 300, changes to the settings via the settings dashboard 400, and so forth.

At act 210, the administrator computing device 112 outputs the modified dashboard. The controller 116 may control the interface 114 to display the modified dashboard. For example, if the administrator used the add-gadget button 310 to add an additional gadget to the dashboard 300, act 210 may include the controller 116 controlling the interface 114 to display a modified dashboard similar to the dashboard 300 but including the additional gadget. In another example, if the administrator used the dashboard-settings button 312 and the settings dashboard 400 to modify the name, number of columns, or owner of the dashboard 300, act 210 may include the controller 116 controlling the interface 114 to display a modified dashboard similar to the dashboard 300 but including the modified name, number of columns, or owner.

After act 210, the process 200 may return to act 202. Similarly, if the administrator computing device 112 determines that a modification has not been made to the displayed dashboard at act 208 (208 NO), then the process 200 returns to act 202. As discussed above, act 202 may include outputting dashboard information including a user list. In some examples, iterations of act 202 may include displaying the dashboard 300, or a modification thereof. The dashboard 300 includes a user-list button 314 which a user may interact with to display the user list. Accordingly, at act 204, a user may interact with the user-list button 314 to display a list of alternative users for whom dashboards may be displayed.

Accordingly, an administrator may modify and configure various aspects of user dashboards. These modifications and configurations may include adjusting the number, position, and content of gadgets, updating the number of columns displayed on a dashboard, changing the name and/or owner of a dashboard, and so forth.

In some examples, users may have access to multiple dashboards. For example, the dashboard 300 includes a dashboard list 316 depicting a list of various dashboards. In some examples, the dashboard list 316 may list all dashboards, regardless of which user owns the dashboard 300. In other examples, the dashboard list 316 may only list dashboards that the owner of the dashboard 300 has access to. For example, as illustrated by the user-list button 314, a user named "Bob" owns the dashboard 300. In still other examples, the dashboard list 316 may list all dashboards, but may list the dashboards in a priority order beginning with dashboards that the owner of the dashboard 300 has access to. In various examples, if the dashboard list 316 displays dashboards that a user lacks permission to access, and the user attempts to open that dashboard, the user may be presented with an error message indicating that the user lacks permission to access the selected dashboard.

Although some dashboards may be owned by a certain user (that is, the dashboard may be specifically assigned to and accessible to a particular user), other dashboards may be accessible to multiple users. For example, "global dashboards" may include dashboards that are accessible to all users. In some examples, global dashboards may be viewable and configurable by all users. In other examples, global dashboards may only be viewable by all users, and may be configurable by only a subset of the users (for example, by only being editable by administrators). An administrator may set a dashboard to be a global dashboard by assigning the global dashboard to be owned by everyone; for example, as illustrated in FIG. 4B, the drop-down menu 414 includes a "Global" option to make a corresponding dashboard a global dashboard.

In some examples, all users have access to global dashboards and can view all information displayed by the global dashboards. In other examples, all users may have access to global dashboards, but may only be able to view certain information displayed by the global dashboards. For example, a camera-feed gadget may be included in a global dashboard that is accessible to all users. However, while some users may be able to view the camera feed, other users may lack permission to view the camera feed. For those users lacking permission, the camera-feed gadget may not display the camera feed, and may instead display a black box where the camera feed would otherwise be. Thus, while all users may have access to a global dashboard, certain contents of the global dashboard may be inaccessible to certain users depending on those users' access permissions. Access permissions may be configurable by an administrator.

In some examples, the administrator computing device 112 may be communicatively coupled to each of the user computing devices 118 to customize the dashboards provided via the user computing devices 118. In various examples, the administrator computing device 112 may be communicatively coupled to one or more servers configured to store dashboard-configuration information which is provided to the user computing devices 118, and may or may not be directly communicatively coupled to the user computing devices 118.

Various controllers, such as the controller 116, may execute various operations discussed above. The controller 116 may be or include one or more hardware components and may be or include processing circuitry. The controller 116 may also execute one or more instructions stored on one or more non-transitory computer-readable media, which the controller 116 may include and/or be coupled to, which may result in manipulated data. The one or more non-transitory computer-readable media may be or include hardware devices. The non-transitory computer-readable media may include memory and/or storage hardware. In some examples, the controller 116 may include one or more processors or other types of controllers. In one example, the controller 116 is or includes at least one processor. Example processors may include hardware components such as microprocessors. In another example, the controller 116 performs at least a portion of the operations discussed above using an application-specific integrated circuit tailored to perform particular operations in addition to, or in lieu of, a processor. As illustrated by these examples, examples in accordance with the present disclosure may perform the operations described herein using many specific combinations of hardware and software and the disclosure is not limited to any particular combination of hardware and software components. Examples of the disclosure may include a computer-program product configured to execute methods, processes, and/or operations discussed above. The computer-program product may be, or include, one or more controllers and/or processors configured to execute instructions to perform methods, processes, and/or operations discussed above. The computer-program product may be, or include, at least one hardware component configured to store and/or execute at least one computer program, and may be or include processing circuitry.

Further embodiments are provided below in the form of numbered examples:
Example 1. A system for customizing dashboards, the system comprising:
   at least one interface; and
   at least one controller coupled to the at least one interface and configured to
      output, via the at least one interface, a list of users;
   receive a selection of a first user from the list of users;
   output, via the at least one interface, a first dashboard associated with the first user, wherein the first dashboard comprises a first information type;
   receive a selection of a second information type;
   output, via the at least one interface, the first dashboard associated with the first user, wherein the first dashboard comprises the second information type;
   receive a selection of a second user from the list of users; and
   output, via the at least one interface, a second dashboard associated with the second user, wherein the second dashboard comprises a third information type.
Example 2. The system of example 1, wherein the at least one controller is further configured to associate the second dashboard with a third user from the list of users.
Example 3. The system of example 2, wherein associating the second dashboard with the third user includes granting access privileges to the second dashboard to the third user.
Example 4. The system of example 2, wherein associating the second dashboard with the third user includes removing access privileges to the second dashboard from the second user.
Example 5. The system of example 1, wherein the first dashboard simultaneously comprises the first information type and the second information type.
Example 6. The system of example 1, wherein the first information type, the second information type, and the third information type each include one or more of alarm information or sensor information.
Example 7. The system of example 1, wherein the at least one controller is further configured to output a global dashboard associated with all users from the list of users.
Example 8. The system of example 7, wherein the first dashboard and the global dashboard are both accessible to the first user.
Example 9. A method of customizing dashboards, the method comprising:
   outputting a list of users;
   receiving a selection of a first user from the list of users;
   outputting a first dashboard associated with the first user, wherein the first dashboard comprises a first information type;
   receiving a selection of a second information type;
   outputting the first dashboard associated with the first user, wherein the first dashboard comprises the second information type;
   receiving a selection of a second user from the list of users; and
   outputting a second dashboard associated with the second user, wherein the second dashboard comprises a third information type.
Example 10. The method of example 9, further comprising associating the second dashboard with a third user from the list of users.
Example 11. The method of example 10, wherein associating the second dashboard with the third user includes granting access privileges to the second dashboard to the third user.
Example 12. The method of example 10, wherein associating the second dashboard with the third user includes removing access privileges to the second dashboard from the second user.
Example 13. The method of example 9, wherein the first dashboard simultaneously comprises the first information type and the second information type.
Example 14. The method of example 9, wherein the first information type, the second information type, and the third information type each include one or more of alarm information or sensor information.
Example 15. The method of example 9, further comprising outputting a global dashboard associated with all users from the list of users.
Example 16. The method of example 15, wherein the first dashboard and the global dashboard are both accessible to the first user.
Example 17. At least one non-transitory computer-readable medium storing thereon sequences of computer-executable instructions for customizing dashboards, the sequences of computer-executable instructions including instructions that instruct at least one processor to:
   output a list of users;
   receive a selection of a first user from the list of users;
   output a first dashboard associated with the first user, wherein the first dashboard comprises a first information type;
   receive a selection of a second information type;
   output the first dashboard associated with the first user, wherein the first dashboard comprises the second information type;
   receive a selection of a second user from the list of users; and
   output a second dashboard associated with the second user, wherein the second dashboard comprises a third information type.
Example 18. The at least one non-transitory computer-readable medium of example 17, wherein the instructions further instruct the at least one processor to associate the second dashboard with a third user from the list of users.
Example 19. The at least one non-transitory computer-readable medium of example 18, wherein associating the second dashboard with the third user includes granting access privileges to the second dashboard to the third user.
Example 20. The at least one non-transitory computer-readable medium of example 18, wherein associating the second dashboard with the third user includes removing access privileges to the second dashboard from the second user.
Example 21. The at least one non-transitory computer-readable medium of example 17, wherein the first dashboard simultaneously comprises the first information type and the second information type.
Example 22. The at least one non-transitory computer-readable medium of example 17, wherein the first information type, the second information type, and the third information type each include one or more of alarm information or sensor information.
Example 23. The at least one non-transitory computer-readable medium of example 17, wherein the instructions further instruct the at least one processor to output a global dashboard associated with all users from the list of users.
Example 24. The at least one non-transitory computer-readable medium of example 23, wherein the first dashboard and the global dashboard are both accessible to the first user.
Having thus described several aspects of at least one embodiment, it is to be appreciated various alterations, modifications, and improvements will readily occur to those skilled in the art. Such alterations, modifications, and improvements are intended to be part of, and within the spirit and scope of, this disclosure. Accordingly, the foregoing description and drawings are by way of example only.

## Claims

1. A method of customizing dashboards, the method comprising:
outputting (202) a list of users;
receiving (204) a selection of a first user from the list of users;
outputting (206) a first dashboard (300) associated with the first user, wherein the first dashboard (300) comprises a first information type;
receiving (208) a selection of a second information type;
outputting (210) the first dashboard (300) associated with the first user, wherein the first dashboard (300) comprises the second information type;
receiving (204) a selection of a second user from the list of users; and
outputting (206) a second dashboard associated with the second user, wherein the second dashboard comprises a third information type.

2. The method of claim 1, further comprising associating the second dashboard with a third user from the list of users.

3. The method of claim 2, wherein associating the second dashboard with the third user includes granting access privileges to the second dashboard to the third user.

4. The method of claim 2 or of claim 3, wherein associating the second dashboard with the third user includes removing access privileges to the second dashboard from the second user.

5. The method of any of the above claims, wherein the first dashboard (300) simultaneously comprises the first information type and the second information type.

6. The method of any of the above claims, wherein the first information type, the second information type, and the third information type each include one or more of alarm information or sensor information.

7. The method of any of the above claims, further comprising outputting a global dashboard associated with all users from the list of users.

8. The method of claim 7, wherein the first dashboard (300) and the global dashboard are both accessible to the first user.

9. The method of any of claims 7 or 8, whereby the method further comprises the first user taking an action on the basis of information comprised on the global dashboard.

10. The method of any of the above claims, whereby the method further comprises the first user taking an action on the basis of the first or second information type comprised on the first dashboard (300).

11. The method of claim 9 or of claim 10, whereby the action comprises one or more of:
suppressing a server;
restarting a server;
reconfiguring a server;
changing temperature setpoints;
changing temperature thresholds;
increasing cooling capacity;
adding a server;
removing a server;
adding equipment;
removing equipment;
responding to an alarm;
acknowledging an alarm;
adjusting power supply parameters;
initiating maintenance procedures;
reassigning workloads;
enabling a sensor;
disabling a sensor;
enabling a device;
disabling a device;
triggering a backup system;
triggering a failover system;
modifying access permissions;
scheduling an automated routine;
activating a camera feed;
deactivating a camera feed;
activating a monitoring zone; and
deactivating a monitoring zone.

12. The method of any of the above claims, whereby the method further comprises deleting the first dashboard (300).

13. The method according to claim 12, whereby the deleting comprises interacting with a delete button (408) included on a settings dashboard (400).

14. A system (100) for customizing dashboards, the system (100) comprising:
at least one interface (114); and
at least one controller (116) coupled to the at least one interface (114) and configured to operate according to any of method claims 1 to 13.

15. At least one non-transitory computer-readable medium storing thereon sequences of computer-executable instructions for customizing dashboards, the sequences of computer-executable instructions including instructions that instruct at least one processor to operate a system according to claim 14 according to any of method claims 1 to 13.
